# EUROPÄISCHE PATENTSCHRIFT

(11) **EP 0 530 219 B1**
(45) Veröffentlichungstag und Bekanntmachung des Hinweises auf die Patenterteilung: **10.05.1995**
(21) Anmeldenummer: 91908600.9
(22) Anmeldetag: 30.04.1991
(51) Int. Cl.: C02F 1/66, C02F 1/62

(54) **VERFAHREN ZUM AUFBEREITEN VON ABWASSER**
PROCESS FOR TREATING WASTE WATER
PROCEDE POUR LE TRAITEMENT DES EAUX USEES

(30) Priorität: 21.05.1990 DE 4016156
(43) Veröffentlichungstag der Anmeldung: 10.03.1993
(73) Patentinhaber: STEAG Aktiengesellschaft, 45128 Essen (DE)
(72) Erfinder: BEIERS, Heinz-Georg, D-4300 Essen 16 (DE); GEBHARDT, Jürgen, D-4224 Hünxe (DE); WEILER, Helmut, D-5620 Velbert (DE); WITTBOLD, Armin, D-4300 Essen 11 (DE)
(86) Internationale Anmeldenummer: EP9100822
(87) Internationale Veröffentlichungsnummer: WO9117958

(56) Entgegenhaltungen:
- EP-A- 0 355 667
- EP-A- 0 356 605
- DE-A- 2 552 934
- FR-A- 2 120 550
- Patent Abstracts of Japan, Band 13, No. 278, (C-611)(3626), 26 Juni 1989; & JP-a-175094( MItsubishi Metal Corp.) 20.3.1989
- VGB Kraftwerkstechnik, Band 68, Nr. 5, Mai 1988, (Essen, DE), K. Heyn:"Erfahrungen mit der Abwasseraufbereitung hinterRauchgasentschwefelungsanlagen", Seiten 528-536

## Beschreibung

Die Erfindung betrifft ein Verfahren zum Aufbereiten des bei einer Rauchgasentschwefelung, insbesondere von Kraftwerken, nach einer Gipsabtrennung anfallenden Abwassers unter Anhebung des pH-Wertes, wobei in einer ersten Stufe die Gipsübersättigung abgebaut und in einer zweiten Stufe eine Feinklärung durchgeführt wird.

Bekanntermaßen, wie bspw gemäß VGB kraftwerkstechnik, Band 68, Nr 5, Seiten 528-536 wird der pH-Wert des Abwassers zu Beginn des Verfahrens erhöht, so daß der wesentliche Anteil der Schwermetalle bereits in der ersten Stufe ausfällt. Die Schwermetalle vermischen sich mit dem Gips und machen letzteren unbrauchbar. Dementsprechend hoch ist die Deponie-Belastung.

Aus der EP-A-0 355 667 ist ein Verfahren zur Aufbereitung des Abwassers einer Rauchgasentschwefelungsanlage bekannt, bei dem das Abwasser einem Konditionierer zugeführt wird, in dem das Abwasser mit Kalkmilch konditioniert wird, d. h. neutralisiert wird. Das konditionierte Abwasser wird einer Flotationsmaschine zugeführt. Damit besteht die Gefahr, daß der Feststoffaustrag der Flotationsmaschine noch einen erheblichen Anteil von Schwermetallen enthält und somit schwer deponierbar ist.

Bei der DE-A-25 52 934 werden die bei einer Rauchgasreinigung mit Waschwasser anfallenden Reinigungsabwässer, die die Rauchgasrückstände enthalten, zunächst unter Einstellung eines pH-Wertes = 7 entwässert und das Entwässerungsabwasser auf einen pH-Wert von möglichst genau 9 eingestellt; der entstehende Schwermetallschlamm wird abgezogen und wie der zuvor entwässerte und neutralisierte Schlamm einer Deponie zugeführt. Das Rauchgas wird mit Waschwasser gereinigt, so daß es nicht zu einer Gipsbildung kommen kann und das Problem einer Gipsübersättigung gar nicht auftreten kann.

Der Erfindung liegt die Aufgabe zugrunde, das eingangs genannte Verfahren derart weiterzuentwickeln, daß sich die Deponie-Belastung vermindert.

Zur Lösung dieser Aufgabe ist das Verfahren nach der Erfindung dadurch gekennzeichnet, daß der Abbau der Gipsübersättigung in der ersten Stufe bei dem pH-Wert des anfallenden Abwassers durchgeführt wird und in der zweiten Stufe eine Anhebung des pH-Wertes auf 8,0 - 8,5 vorgenommen wird.

Das Abwasser gelangt mit seinem ursprünglichen pH-Wert von ungefähr 6 in die Aufbereitungsanlage, wo in der ersten Stufe gegebenenfalls die vorhandenen Feststoffe ausgefällt werden und vor allen Dingen die Gipsübersättigung abgebaut wird. Der dabei entstehende Gips hat mindestens die Qualität des Naturproduktes und kann als Flußmittel oder Zuschlagstoff in den Prozeß zurückgeführt werden. Auch besteht die Möglichkeit, den Gips beispielsweise als Dämmstoff zu verkaufen. Keinesfalls muß der Gips einer Deponie zugeführt werden, da er nicht bzw. nur in ganz geringem Umfange durch Schwermetalle belastet ist.

Der Erfindung liegt die Erkenntnis zugrunde, daß die meisten Schwermetalle eine mit einer Erhöhung des pH-Wertes absinkende Löslichkeit besitzen. Erfindungsgemäß wird die Erhöhung des pH-Wertes erst in der zweiten Verfahrensstufe durchgeführt. Dort sind die Schwermetalle bzw. deren Hydroxide nur noch mit einem Rest der sonstigen Feststoffe, wie etwa Gips, vermischt.

Gemäß der Erfindung wird vorgeschlagen, daß der pH-Wert auf 8,0 bis 8,5 angehoben wird. Es wurde gefunden, daß dies den erforderlichen Einsatz an Chemikalien vermindert und vor allen Dingen zu einer relativ geringen Schlammenge führt, da kein wesentlicher Anteil an Magnesium-salzen entsteht. Auch ist keine zusätzliche Kalkmilch zur Schlammkonditionierung erforderlich.

Vorzugsweise wird Kalkmilch in der zweiten Stufe zur Anhebung des pH-Wertes zugegeben, da sie sich als chemisch besonders wirksam erwiesen hat und im übrigen kostengünstig ist.

Außerdem sieht die Erfindung vor, daß in der zweiten Stufe Organosulfide zugegeben werden. Diese dienen vor allen Dingen zum Ausfällen derjenigen Schwermetalle und Schwermetall-Hydroxide, die allein über die Anhebung des PH-Wertes nicht zu beseitigen sind. Verwiesen sei in diesem Zusammenhang vor allen Dingen auf Quecksilber. Insgesamt ergibt sich, daß die zweite Stufe denjenigen Verfahrensschritt darstellt, in dem die wesentliche Schadstoffentsorgung erfolgt.

Außerdem kann erfindungsgemäß in der zweiten Stufe vorzugsweise Eisen-III-Chlorid zugegeben werden, um vergleichsweise kleine Flockungspartikel zu koagulieren.

## Patentansprüche

1. Verfahren zum Aufbereiten des bei der Rauchgasentschwefelung, insbesondere von Kraftwerken, anfallenden Abwassers unter Anhebung des pH-Wertes, wobei in einer ersten Stufe die Gipsübersättigung abgebaut und in einer zweiten Stufe eine Feinklärung durchgeführt wird, dadurch gekennzeichnet, daß der Abbau der Gipsübersättigung in der ersten Stufe bei dem pH-Wert des anfallenden Abwassers durchgeführt wird und in der zweiten Stufe eine Anhebung des pH-Wertes auf 8,0 - 8,5 vorgenommen wird.

2. Verfahren nach Anspruch 1, dadurch gekennzeichnet, daß die Anhebung des pH-Wertes durch Zugabe von Kalkmilch zur zweiten Stufe erfolgt.

3. Verfahren nach Anspruch 1 oder 2, dadurch gekennzeichnet, daß der zweiten Stufe Organosulfide zugegeben werden.

4. Verfahren nach einem der Ansprüche 1-3, daß der zweiten Stufe Eisen-III-Clorid zugegeben wird.

## Claims

1. Method of treating the waste water yielded in flue gas desulfurisation, especially of power stations, with raising of the pH value, wherein in a first stage the calcium sulfate over-saturation is reduced and in a second stage a fine clarification is carried out, characterised thereby that the reduction of the calcium sulfate over-saturation is carried out in the first stage at the pH value of the yielded waste water and in the second stage a raising of the pH value to 8.0 to 8.5 is undertaken.

2. Method according to claim 1, characterised thereby that the raising of the pH takes place through addition of lime solution to the second stage.

3. Method according to claim 1 or 2, characterised thereby that organ-sulfides are added to the second stage.

4. Method according to one of claims 1 to 3, [characterised thereby]that the iron-III-chloride is added to the second stage.

## Revendications

1. Procédé pour le traitement des eaux usées résultant de la désulfuration des gaz de fumée, en Particulier d'usines, par l'augmentation de la valeur du pH, où dans un premier étage, la sursaturation du ciment est abaissée et dans un second étage, une clarification des poussières fines est effectuée caractérisé en ce que l'abaissement de la sursaturation du ciment dans le premier étage est accomplie au pH des eaux usées présentes et, au second étage, on entreprend une augmentation du pH à 8,0-8,5.

2. Procédé selon la revendication 1, caractérisé en ce que l'augmentation de la valeur du pH se produit par addition de lait de chaux au second étage.

3. Procédé selon la revendication 1 ou 2, caractérisé en ce qu'au second étage, on ajoute un sulfure organique.

4. Procédé selon l'une quelconque des revendications 1-3, caractérisé en ce qu'au second étage, on ajoute du chlorure de fer III.
